# EUROPÄISCHE PATENTSCHRIFT

(11) **EP 0 912 828 B1**
(45) Veröffentlichungstag und Bekanntmachung des Hinweises auf die Patenterteilung: **25.09.2002**
(21) Anmeldenummer: 98924271.4
(22) Anmeldetag: 02.05.1998
(51) Int. Cl.: F02P 17/12, G01L 23/22

(54) **VERFAHREN ZUR ERKENNUNG KLOPFENDER VERBRENNUNG BEI EINER BRENNKRAFTMASCHINE MIT EINER WECHSELSPANNUNGSZÜNDANLAGE**
METHOD FOR IDENTIFYING KNOCKING COMBUSTION IN AN INTERNAL COMBUSTION ENGINE WITH AN ALTERNATING CURRENT IGNITION SYSTEM
PROCEDE POUR LA RECONNAISSANCE D'UNE COMBUSTION ACCOMPAGNEE D'UN COGNEMENT DANS UN MOTEUR A COMBUSTION INTERNE POURVU D'UN SYSTEME D'ALLUMAGE A TENSION ALTERNATIVE

(30) Priorität: 16.05.1997 DE 19720535
(43) Veröffentlichungstag der Anmeldung: 06.05.1999
(73) Patentinhaber: DaimlerChrysler AG, 70567 Stuttgart (DE); Conti Temic Microelectronic GmbH, 90411 Nürnberg (DE)
(72) Erfinder: HOHNER, Peter, D-70771 Echterdingen (DE); SCHIRMER, Jens, D-90542 Eckental (DE)
(74) Vertreter: Kolb, Georg
(86) Internationale Anmeldenummer: EP9802605
(87) Internationale Veröffentlichungsnummer: WO98053198

(56) Entgegenhaltungen:
- EP-A- 0 654 604
- DE-A- 4 409 749
- DE-C- 19 614 287
- US-A- 4 406 273

## Beschreibung

Die Erfindung betrifft ein Verfahren zur Erkennung klopfender Verbrennung bei einer Brennkraftmaschine wie es aus der Druckschrift DE 44 09 749 A1 bekannt ist.

Klopfende Verbrennung entsteht durch zu hohe Maximaldrücke in den Brennräumen der Brennkraftmaschine, die zu einer Erhöhung der Temperatur des unverbrannten Kraftstoff - Luft - Gemisches und damit zur Selbstentzündung des Kraftstoff - Luft - Gemisches führen. Diese zu hohen Maximaldrücke in den Brennräumen werden am Häufigsten im Vollastbetrieb der Brennkraftmaschine erreicht.

Zur Bestimmung klopfender Verbrennung wird in allen Brennräumen der Brennkraftmaschine der Brennraumdruckverlauf mittels der lonenstrommessung erfaßt. Ein Verfahren zur lonenstrommessung ist beispielsweise aus der Druckschrift DE 33 27 766 A1 bekannt. Klopfende Verbrennung ist dabei am Auftreten von Druckspitzen und Schwingungen im Brennraumdruckverlauf erkennbar. Dazu wird der gleichzeitig als lonenstromsonde dienenden Zündkerze unmittelbar nach der Zündung des Kraftstoff - Luft - Gemisches über die Zündspule eine Wechselspannung zugeführt. Diese Wechselspannung wird von Ionen im verbrennenden Kraftstoff - Luft - Gemisch in Abhängigkeit des Brennraumdruckes moduliert. Die modulierte Wechselspannung wird einer Auswerteschaltung zugeführt.

Während der Zündung des Kraftstoff - Luft - Gemisches durch die Zündkerze kann die lonenstrommessung nicht durchgeführt werden. Deshalb ist es notwendig, die Funkenbrenndauer der Zündkerze auf ein Minimum zu reduzieren, um direkt anschließend den Brennraumdruckverlauf zu erfassen und möglicherweise klopfende Verbrennung zu erkennen.

Die Forderung nach einer kurzen Funkenbrenndauer an der Zündkerze wird beim Vollastbetrieb der Brennkraftmaschine durch die leichte Entflammbarkeit des Kraftstoff - Luft - Gemisches unterstützt. Zudem ist die in den Brennräumen verbliebene Restgasrate des vorangegangenen Arbeitstaktes bei Vollastbetrieb der Brennkraftmaschine gering, die einer leichten Entflammbarkeit des Kraftstoff - Luft - Gemisches entgegenstehen könnte.

Im Teillastbereich wird die Leistungsabgabe einer Brennkraftmaschine über eine Drosselklappe gesteuert. Schließt die Drosselklappe, wird den Brennräumen weniger Kraftstoff - Luft - Gemisch zugeführt, wodurch sich die Leistungsabgabe der Brennkraftmaschine verringert. Durch die geringere Kraftstoffmenge weist der Brennraumdruckverlauf während dem Arbeitstakt deutlich geringere Maximaldrücke auf. Zudem erhöht sich die vom vorangegangenen Arbeitstakt im Zvlinder verbliebene Restgasrate. Wird zusätzlich über eine externe Abgasrückführungsleitung dem Kraftstoff - Luft - Gemisches zur Entdrosselung der Brennkraftmaschine verbranntes Abgasgemisch zugeführt, benötigt das Kraftstoff - Luft - Gemisch im Brennraum für die sichere Entflammung eine hohe Zündenergie und eine lange Funkenbrenndauer.

Der Forderung nach einer langen Funkenbrenndauer im Teillastbetrieb kommt die Tatsache entgegen, daß die Maximaidrücke im Brennraumdruck-Verlauf deutlich geringer sind als im Vollastbetrieb der Brennkraftmaschine. Deshalb kann auf die Durchführung einer lonenstrommessung zum detektieren klopfender Verbrennung im unteren Teillastbetrieb verzichtet werden. Die Funkenbrenndauer der Zündkerze kann sich gegebenenfalls über den gesamten Arbeitstakt erstrecken.

Die Eigenschaft, daß die benötigten Funkenbrenndauern der Zündkerzen im Teillastbetrieb und die Notwendigkeit einer lonenstrommessung im Vollastbetrieb sich bei der Verteilung der zu Verfügung stehenden Zeitspanne während dem Arbeitstakt positiv ergänzen, wurde bereits in der oben genannten gattungsbildenden Druckschrift DE 44 09 7 49 A1 beschrieben. Dabei wurde Vorgeschlagen, die Ionenstromerfassungseinrichtung mit einer Hochspannungstransistorspulenzündeinrichtung zu kombinieren, wodurch die Möglichkeit entsteht, besonders lange Funkenbrenndauern der Zündkerzen zu realisieren, die beispielsweise durch Kurzschließen des Sekundärkreises der Zündspule begrenzt werden können.

Die Nachteile dieses Verfahrens bestehen darin, daß die Zündspule für jeden Arbeitstakt mit der Energie für eine lange Funkenbrenndauer der Zündkerzen geladen wird, und bei der Begrenzung der Funkenbrenndauer ein großer Anteil der Energie vernichtet wird, wodurch die Hochspannungstransistorspulenzündeinrichtung unnötig groß dimensioniert werden muß.

Der Erfindung liegt die Aufgabe zugrunde, ein Verfahren zur Erkennung klopfender Verbrennung bei einer Brennkraftmaschine mit einer lonenstrommeßvorrichtung und einer Zündvorrichtung anzugeben, die die zur Verfügung stehende Zeitspanne während dem Arbeitstakt im Teillastbetrieb für die Funkenbrenndauer der Zündkerzen und im Vollastbetrieb zur Ionenstrommessung nutzt, und dabei lastabhängig genau soviel Energie über die Zündspule den Zündkerzen zuführt, wie für eine sichere Zündung des Kraftstoff - Luft - Gemisches benötigt wird.

Diese Aufgabe wird erfindungsgemäß gelöst, mit dem Merkmalen nach Anspruch 1, wobei insbesondere mittels einer als Wechselspannungszündanlage ausgebildeten Zündvorrichtung die Länge der Funkenbrenndauer gesteuert wird und die Zündenergie des Zündfunkens der Zündkerze entsprechend dem Lastzustand der Brennkraftmaschine und weiteren motorverfügbaren Kennwerten während einem Zündvorgang gesteuert wird. Die Bestimmung der optimalen Zündenergien und Zünddauern erfolgt in einem Steuergerät. Die Zündenergie des Zündfunkens der Zündkerze wird gesteuert, indem eine von dem Steuergerät vorgegebene Referenzspannung am Steuereingang der Wechselspannungszündanlage für einen Zündvorgang einer Zündkerze auf Gleichheit mit der an einem Meßwiderstand abfallenden Spannung verglichen wird.

Je höher der Betrag der Referenzspannung am Steuereingang der wechselspannungszühdanlage, desto länger ist der Zündtransistor der Wechselstromzündanlage leitend, desto länger wird die Zündspule geladen und desto höher wächst der Primärspulenstrom an, bis die an dem Meßwiderstand abfallende Spannung gleich der Referenzspannung ist. Die Länge der Funkenbrenndauer des Zündfunkens der Zündkerze wird durch die Dauer der Zeitspanne gesteuert, während der am Steuereingang der Wechselspannungszündanlage eine Referenzspannung anliegt, die höher ist als die minimal Notwendige, um auf der Sekundärseite der Zündspule eine Zündspannung zu erzeugen, die zur Entstehung eines Zündfunkens an der Zündkerze ausreicht.

in einer vorteilhaften Weiterbildung der Erfindung wird die lonenstrommessung zur Erkennung von Verbrennungsaussetzern durchgeführt, wobei nach Abschluß der Funkenbrenndauer bei einer erfolglosen Entzündung des Kraftstoff - Luft - Gemisches kein lonenstromsignal detektiert wird.

In einer weiteren vorteilhaften Weiterbildung der Erfindung wird die Frequenz der Wechselspannungszündanlage jeweils an die Erfordernisse der Zündung des Kraftstoff -Luft - Gemisches und der lonenstrommessung angepaßt. Derartige Schaltungsanordnungen zur lonenstrommessung und zur Wechselstromzündung der Brennkraftmaschine sind in den nicht vorveröffentlichten Druckschriften 196 142 87 und 196 14 288 beschrieben.

Bei dem Verfahren zur Erkennung klopfender Verbrennung bei einer Brennkraftmaschine mit einer Wechselspannungszündanlage wird immer nur soviel Energie vom Netzteil der Zündanlage in die Zündspule geladen, wie zur Aufrechterhaltung des Zündfunkens der Zündkerze für die nächste halbe Amplitude des Wechselzündstromes auf der Sekundärseite der Zündspule benötigt wird. Bei einem Zündfunken mit kurzer Brenndauer wird dabei keine Energie unnötig in Wärme umgewandelt.

Im folgenden wird die erfindungsgemäße Verfahren zur Erkennung klopfender Verbrennung bei einer Brennkraftmaschine mit einer Zündanlage anhand von einem Ausführungsbeispiel im Zusammenhang mit drei Figuren dargestellt und erläutert.

Es zeigen:
- Figur 1: Prinzipschaltbild einer Wechselspannungszündanlage mit einer lonenstrommeßvorrichtung
- Figur 2a: eine schematische Darstellung des Spannungsverlaufes am Steuereingang der Wechselspannungszündanlage und des daraus resultierenden Primärspulenstrom sowie der Kollektorspannung am Zündtransistor im unteren Teillastbetrieb der Brennkraftmaschine
- Figur 2b: eine schematisch Darstellung der Funkenbrenndauer und eines errechneten lonenstromsignals im unteren Teillastbetrieb der Brennkraftmaschine
- Figur 3a: eine schematische Darstellung des Spannungsverlaufes am Steuereingang der wechselspannungszündanlage und des daraus resultierenden Primärspulenstrom sowie der Kollektorspannung am Zündtransistor im Vollastbetrieb der Brennkraftmaschine
- Figur 3b: eine schematisch Darstellung der Funkenbrenndauer und eines gemessenen lonenstromsignals im Vollastbetrieb der Brennkraftmaschine

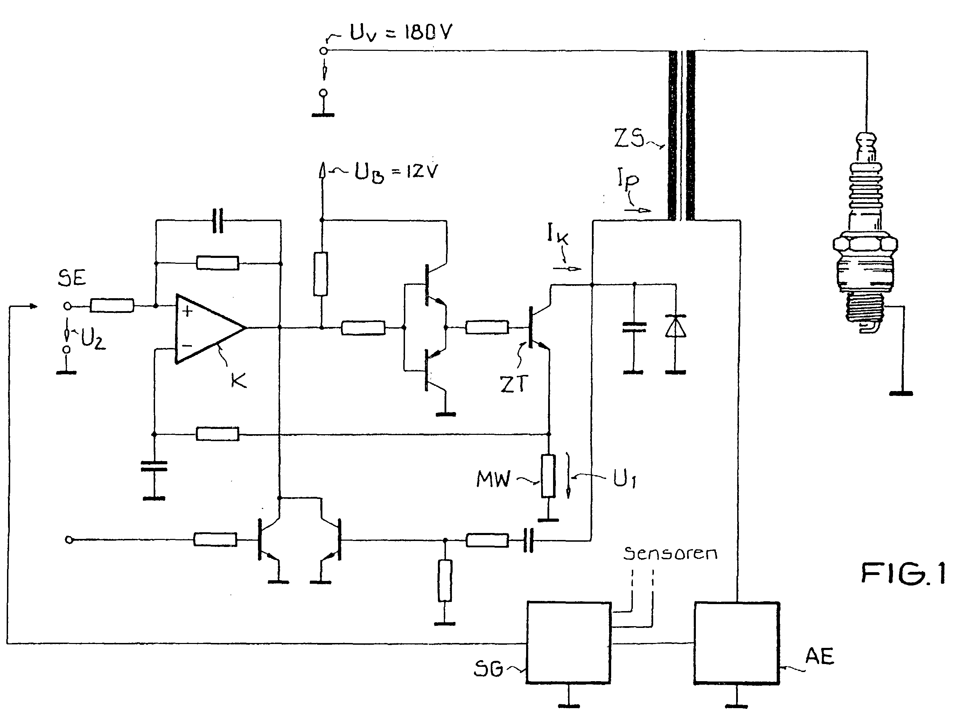

In der Figur 1 ist das Prinzipschaltbild einer Wechselspannungszündanlage mit einer lonenstrommeßvorrichtung dargestellt, wobei der Einfachheit halber nur eine Zündendstufe mit einer Zündkerze ZK wiedergegeben ist. Bei mehrzylindrigen Brennkraftmaschinen besteht durch die sequentielle Ansteuerung der Zündkerzen ZK die Möglichkeit, bestimmte Teile der dargestellten Wechselspannungszündanlage für alle Zylinder gemeinsam zu nutzen. so kann insbesondere der Meßwiderstand MW für alle Zylinder gemeinsam genutzt werden.

Die Referenzspannungen U2 am Steuereingang SE der Wechselspannungszündanlage werden auf der Basis von motorverfügbaren Kennwerten von einem Steuergerät SG generiert und bereitgestellt. Dies sind in der Hauptsache der Lastzustand, die Drehzahl und die Abgasrückführungsrate der Brennkraftmaschine.

Der Lastzustand der Brennkraftmaschine wird durch die Stellung der Drosselklappe (allg.: der drosselnd wirkende Bauteile einer Brennkraftmaschine) im Luft - Ansaugtrakt vorgegeben. Im unteren Teillastbetrieb der Brennkraftmaschine ist die Drosselklappe nur wenig geöffnet, im mittleren Teillastbetrieb ist sie zur Hälfte geöffnet und im oberen Teillastbetrieb ist sie etwa zu zwei/drittel geöffnet. Als Vollastbetrieb wird der Lastzustand einer Brennkraftmaschine bezeichnet, bei dem die Drosselklappe voll geöffnet ist. Dabei sind die Übergänge der lastabhängigen Effekte bei einem Lastwechsel natürlich fließend.

Im unteren Teillastbetrieb der Brennkraftmaschine werden die Brennräume über die teilweise geschlossene Drosselklappe mit einem geringen Teil der möglichen Kraftstoff - Luft - Gemisch - Menge gefüllt. Der Brennraumdruckverlauf, der aus den teilweise gefüllten Brennräumen resultiert, weist im Gegensatz zum Vollastbetrieb deutlich geringe Maximaldrücke auf. Dadurch erwärmt sich das Kraftstoff - Luft - Gemisch bei der Kompression während dem Verdichtungstakt nicht so stark, so daß keine klopfende Verbrennung entsteht. Folglich kann im unteren Teillastbereich auf die Durchführung der lonenstrommessung zur Erfassung klopfender Verbrennung verzichtet werden, wodurch die gesamte zur Verfügung stehende Zeitspanne während dem Arbeitstakt für die Zündung des Kraftstoff - Luft - Gemisches durch die Zündkerze ZK zur Verfügung steht.

Der Verbrennungsvorgang im unteren und mittleren Teillastbetrieb wird dadurch beeinflußt, daß die Gesamtgasmenge der Brennräume nach dem Ansaugtakt einen hohen Anteil an in den Brennräumen verbliebenem Restgasrate des vorangegangenen Arbeitstaktes aufweist, das einer leichten Entflammbarkeit des Kraftstoff - Luft - Gemisches entgegen steht.

Die Brennkraftmaschine wird zudem mit hohen Abgasrückführungsraten betrieben, bei denen das Kraftstoff - Luft - Gemisch im Ansaugkanal zusätzlich mit nicht brennbarem Abgasgemisch angereichert wird. Dadurch kann die Drosselklappe im Ansaugkanal weiter geöffnet werden und stellt dem angesaugten Kraftstoff - Luft - Gemisch einen geringeren Widerstand da. Für eine zuverlässige Entzündung des Kraftstoffgemisches besteht dadurch die Notwendigkeit für den Funkendurchbruch einen hohen Primärspulenstrom und eine lange Funkenbrenndauer bereitzustellen.

Dazu wird der Steuereingang SE der Wechselspannungszündanlage von dem Steuergerät SG mit einer hohen Referenzspannung U2₁ angesteuert, bis zu der die am Meßwiderstand MW abfallende Spannung U1 ansteigen muß, bevor der Komparator K der Wechselspannungszündanlage die Gleichheit von U1 und U2 feststellt und der Zündtransistor ZT geschlossen wird. Dabei fließt eine hoher Primärspulenstrom lpr durch die Zündspule ZS und induziert in dessen Sekundärkreis eine hohe Sekundärspulenspannung von etwa 30000 Volt, wodurch an der Zündkerze ZK ein hochenergetischer Zündfunken entsteht. Nachdem der Funkendurchbruch erfolgt ist, kann die Zündenergie für die Erhaltung des Zündfunkens bei den folgenden Amplituden des selben Zündvorgangs reduziert werden. Dazu wird der Steuereingang SE der Wechselspannungszündanlage mit einer geringeren zweiten Referenzspannung U2₂ angesteuert. Dadurch verkürzt sich die Zeitspanne bis die am Meßwiderstand MW abfallende Spannung U1 den Wert der zweiten Referenzspannung U2₂ erreicht hat und der Zündtransistor ZT geschlossen wird. Dementsprechend fließt ein geringerer Primärspulenstrom lpr durch die Zündspule ZS und induziert in dessen sekundärkreis eine geringere Sekundärspulenspannung von etwa 10000 Volt, wodurch die Zündenergie des Zündfunkens entsprechend geringer ausfällt.

In der Figur 2a ist schematisch der zeitliche Verlauf der Referenzspannung U2 bzw. der beiden Referenzspannungen U2₁ und U2₂, am Steuereingang SE der Wechselstromzündanlage für einen einzelnen Zündvorgang an einer Zündkerze ZK während dem unteren Teillastbetrieb aufgetragen. Darunter ist der dazugehörige zeitliche Verlauf des Primärspulenstroms lpr sowie die Kollektorspannung UK des Zündtransistors ZT aufgetragen.

Dabei ist genau ein Zündvorgang an einer Zündkerze ZK wiedergegeben, wobei sich der Zündfunken aus 16 einzelnen Stromspitzen bildet. Zu erkennen ist, daß die hohe erste Referenzspannung U2₁ auch zu hohen Primärspulenströmen lpr und zu hohen Kollektorspannungen UK führt und daß die geringere zweite Referenzspannung U2₂ zu geringeren Primärspulenströmen lpr und zu geringeren Kollektorspannungen UK führt. Zu erkennen ist auch, daß die Frequenz der Wechselspannung der wechselspannungszündanlage proportional zum Primärspulenstrom lpr bzw. zur Referenzspannung U2 ist.

Je höher der Primärspulenstrom lpr desto kleiner die Frequenz der Wechselspannung. Eine Kompensation dieser Abhängigkeit könnte beispielsweise durch die Anpassung der Kapazität des primärseitigen Kondensators C1 erfolgen, wobei die Umschaltung der Kapazität zeitgleich mit der Änderung der Referenzspannung U2 am Steuereingang SE der Wechselspannungszündanlage erfolgen würde, währenddessen der Zündtransistor ZT der Wechselspannungszündanlage gesperrt ist.

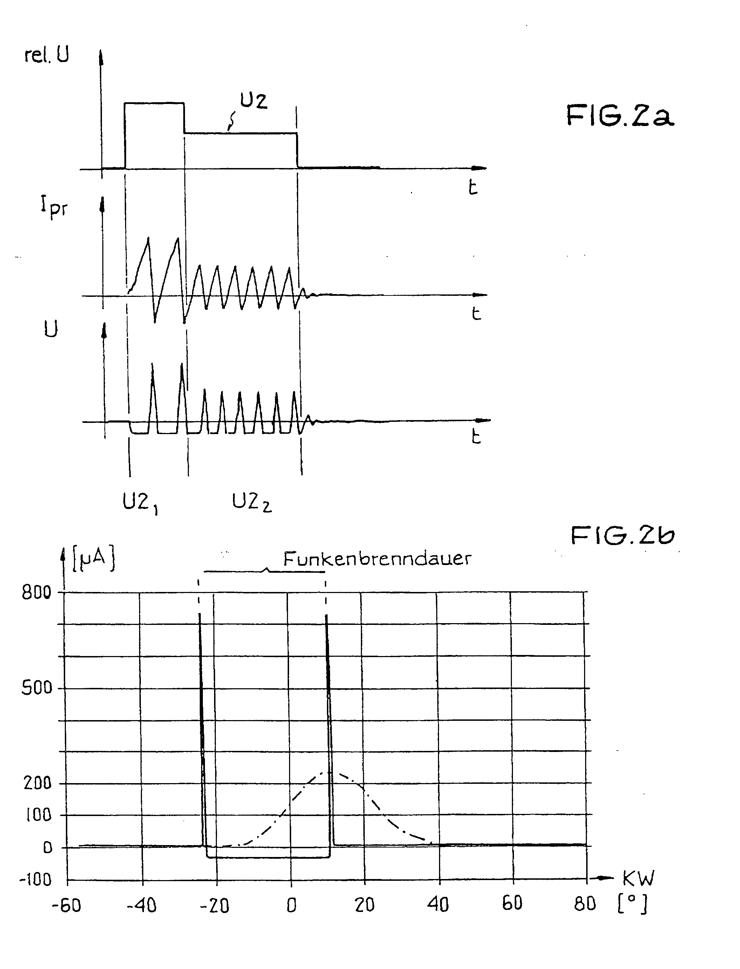

In der Figur 2b ist die Funkenbrenndauer und das resultierende (errechnete) lonenstromsignat beim unteren Teillastbetrieb über den Kurbelwellendrehwinkel aufgetragen. Dabei ist zu erkennen, daß bei der notwendigen Funkenbrenndauer keine aussagekräftige lonenstrommessung zur Erkennung klopfender Verbrennung durchgeführt werden kann.

Nach dem Abschluß der Funkenbrenndauer wird die lonenstrommessung jedoch noch wirkungsvoll zur Erkennung von Zündaussetzern genutzt. Während bei einer erfolgreichen Entzündung des Kraftstoff - Luft - Gemisches nach dem Abschluß der Funkenbrenndauer noch das abklingen des tonenstromsignal detektiert wird, kann bei einer nicht erfolgten Entzündung des Kraftstoff - Luft- Gemisches kein lonenstromsignal detektiert werden.
Im mittleren und oberen Teillastbetrieb sowie im Vollastbetrieb der Brennkraftmaschine wird die Drosselklappe so weit geöffnet, daß die Brennräume mit einem hohen Anteil der möglichen Kraftstoff - Luft - Gemisch Menge gefüllt werden. Der Brennraumdruckverlauf weist dabei hohe Maximaldrükke auf. Zudem erwärmt sich das Kraftstoff - Luft - Gemisch bereits bei der Kompression während dem Verdichtungstakt sehr stark, wobei klopfende Verbrennung entstehen kann. Zum Erfassen klopfender Verbrennung wird die lonenstrommessung durchgeführt. Dazu muß während dem Arbeitstakt die Funkenbrenndauer auf ein Minimum für eine sichere Zündung des Kraftstoff - Luft - Gemisches durch die Zündkerze ZK reduziert werden, um eine aussagekräftige lonenstrommessung zur Erfassung klopfender Verbrennung durchführen zu können. Der verbrennungsvorgang im gehobenen Teillastbetrieb und im Vollastbetrieb wird dadurch beeinflußt, daß die Gesamtgasmenge der Brennräume nach dem Ansaugtakt einen nur geringen Anteil an in den Brennräumen verbliebener Restgasrate des vorangegangenen Arbeitstaktes aufweist.

Dadurch genügt es für eine zuverlässige Entzündung des Kraftstoffgemisches einen kurzen, intensiven Zündfunken bereitzustellen. Dazu wird der Steuereingang SE der Wechselspannungszündanlage von dem Steuergerät SG mit einer hohen Referenzspannung U2₁ angesteuert, bis zu der die am Meßwiderstand MW abfallende Spannung U1 ansteigen muß, bevor der Komparator K der Wechselspannungszündanlage die Gleichheit von U1 und U2 feststellt und der Zündtransistor ZT geschlossen wird. Dabei fließt ein hoher Primärspulenstrom Ipr durch die Zündspule ZS und induziert in dessen Sekundärkreis eine hohe Sekundärspulenspannung von etwa 30000 Volt, wodurch die Zündenergie des Zündfunkens der Zündkerze ZK hoch ist. Bereits nach einer Amplitude wird der Steuereingang SE der Wechselspannungszündanlage mit einer Referenzspannung U2₁ von Null Volt angesteuert. Dadurch erlischt der Zündfunken an der Zündkerze ZK. Unmittelbar nach der Beendigung des Zündvorgangs wird zur lonenstrommessung auf der Primärseite der Zündspule ZS eine Wechselspannung mit einer für die lonenstrommessung angepaßten Frequenz generiert.

Beispielsweise wird die Frequenz des primärseitigen Schwingkreises durch die Verminderung der Kapazität des Schwingkreises der Wechselstromzündanlage erhöht. Die Amplitude der sekundärseitigen Wechselspannung ist so ausgelegt, daß sie sekundärseitig keine Zündfunken herbeizuführen kann, z.B. 1 kV. Dazu kann beispielsweise die Versorgungsspannung U_{V} primärseitig auf 12 Volt oder eine andere verfügbare Bordspannung U_{B} umgeschaltet werden. Sekundärseitig bewirkt die Wechselspannung einen Stromfluß über die ionisierte Zündfunkenstrecke. Dabei bewirken Schwankungen im Brennraumdruckverlauf Veränderungen des lonenstromes, die wiederum eine Amplitudenmodulation des sekundärseitigen Wechselspannung zur Folge haben.

Der Frequenzabstand zwischen der zur lonenstrommessung generierten Wechselspannung und dem Frequenzspektrum des lonenstromsignales sollte möglichst groß sein, da dies die Auskopplung des lonenstromsignales von der amplitudenmodulierten Wechselspannung erleichtert. Bei einem Klopfspektrum von üblicherweise 8 - 18 kHz sollte die Frequenz der zur lonenstrommessung erzeugten Wechselspannung 50 - 100 kHz betragen.

Dabei ist die Möglichkeit einer einfachen Auskopplung des lonenstromsignales von der zur lonenstrommessung generierten Wechselspannung mittels eines Tiefpasses gegeben.

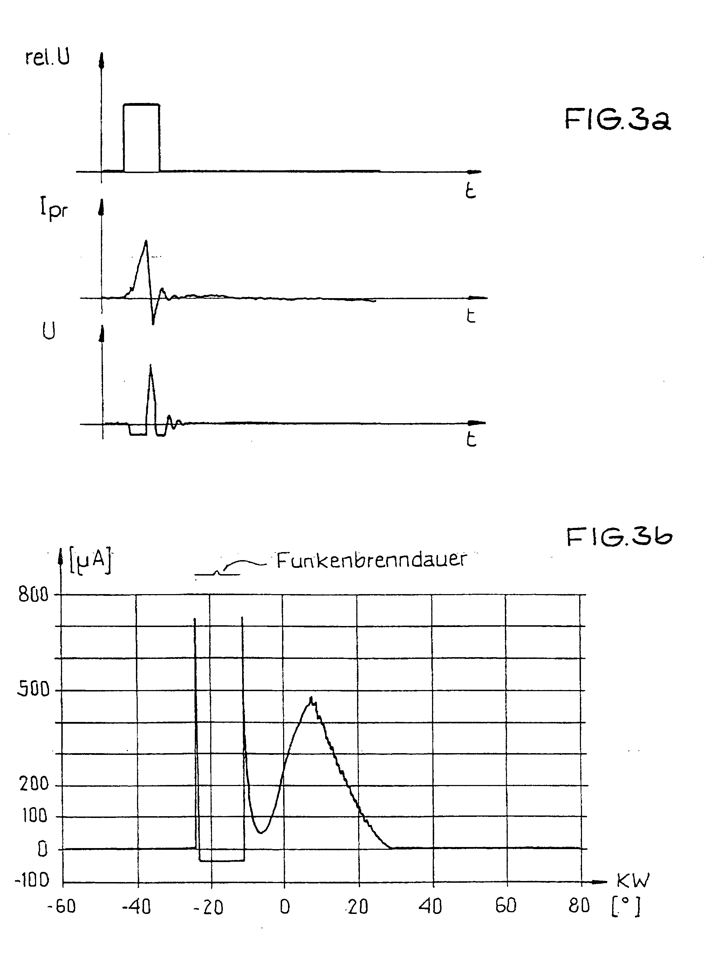

In der Figur 3a ist schematisch der zeitliche Verlauf der Referenzspannung U2 am Steuereingang SE der Wechselstromzündanlage für einen einzelnen Zündvorgang an einer Zündkerze ZK beim Vollastbetrieb aufgetragen. Darunter ist der dazugehörige zeitliche Verlauf des Primärspulenstroms lpr sowie die Kollektorspannung UK des Zündtransistors ZT aufgetragen.

Dabei ist genau ein Zündvorgang an einer Zündkerze ZK wiedergegeben, wobei sich der Zündfunken aus 2 einzelnen Stromspitzen bildet.

In der Figur 3b ist die Funkenbrenndauer und das gemessene lonenstromsignal beim Vollastbetrieb über den Kurbelwellendrehwinkel aufgetragen, das zunächst die erfolgreiche Entzündung der Kraftstoff - Luft - Gemisches die Erkennung von Zündaussetzern belegt. Zudem ist zu erkennen, daß nach Beendigung der kurzen Funkenbrenndauer eine aussagekräftige lonenstrommessung durchgeführt werden kann. Ab dem maximaien Brennraumdruck treten Druckspitzen und Schwingungen im Brennraumdruckverlauf auf, die eine klopfende Verbrennung anzeigen. Als Reaktion auf eine derartig klopfende Verbrennung wird in der Regel der Zündzeitpunkt des Kraftstoff - Luft - Gemisches in Richtung des oberen Totpunktes verschoben.

Die Steuerung des Endwertes des Primärspulenstromes lpr durch die Veränderung der Referenzspannung U2 am Steuereingang SE der Wechselspannungszündanlage erlaubt die Anpassung der Zündenergie eines Zündfunkens an die Erfordernisse des Verbrennungsvorgangs, wobei gegebenenfalls für jede Halbwelle der von der Wechselspannungszündanlage zur Zündung des Kraftstoff - Luft - Gemisches generierten Wechselspannung eine unterschiedliche Referenzspannung U2 vorgegeben werden kann und wodurch insgesamt eine Reduzierung der benötigten Zündenergie erreicht wird. Die Vorteile dieser Reduzierung liegen in einer geringeren Stromaufnahme der Wechselspannungszündanlage bei gleich guter Entflammbarkeit des Kraftstoffes. Zudem sinkt die Netzteilbelastung der Wechselspannungszündanlage, wodurch das Netzteil entsprechend kleiner und kostengünstiger dimensioniert werden kann. Weiterhin wird die bei langen Funkendauern zunehmende Erosion der Zündkerzen ZK minimiert.

## Patentansprüche

1. Verfahren zur Erkennung klopfender Verbrennung bei einer Brennkraftmaschine mit einer Zündanlage, bei der die Länge der Funkenbrenndauer des Zündfunkens der Zündkerze (ZK) in Abhängigkeit des Lasfzustandes der Brennkraftmaschine verändert wird, und mit einer lonenstrommeßvorrichtung. die nach dem Ende der Funkenbrenndauer den Druckverlauf in den Brennräumen der Brennkraftmaschine ermittelt, **dadurch gekennzeichnet, daß** mittels einer als Wechselspannungszündanlage ausgebildeten Zündanlage die Länge der Funkenbrenndauer des Zündfunkens der Zündkerze (ZK) durch die Vorgabe der Anzahl der zur Bildung eines Zündfunkens an die Zündkerze (ZK) übertragenen Amplituden der Wechselspannung verlustfrei gesteuert wird, und daß die Zündenergie des Zündfunkens der Zündkerze (ZK) entsprechend des Lastzustandes der Brennkraftmaschine und weiteren motorverfügbaren Kennwerten verändert wird.

2. Verfahren nach Anspruch 1, **dadurch gekennzeichnet, daß** die Zündenergie des Zündfunkens der Zündkerze (ZK) gesteuert wird, indem die Wechselspannungszündanlage für einen Zündvorgang einer Zündkerze (ZK) die an einem Meßwiderstand (MW) abfallende Spannung (U1) auf Gleichheit mit einer von einem Steuergerät (SG) vorgegebenen Referenzspannung (U2) an einem Steuereingang (SE) der Wechselspannungszündanlage vergleicht.

3. Verfahren nach Anspruch 1 oder 2, **dadurch gekennzeichnet, daß** nach Abschluß der Funkenbrenndauer mittels der lonenstrommeßvorrichtung eine Erkennung von Verbrennungsaussetzern durchgeführt wird.

4. Verfahren nach einem der Ansprüche 1 bis 3, **dadurch gekennzeichnet, daß** die Frequenz der Wechselspannungszündanlage an die Erfordernisse der Zündung des Kraftstoff - Luft - Gemisches und der lonenstrommessung angepaßt wird.

## Claims

1. Method of identifying combustion knock in an internal combustion engine having an ignition system, in which the length of the spark duration of the ignition spark of the spark plug (ZK) is varied in dependence upon the load condition of the i.c. engine, and having an ionic current measuring apparatus, which after the end of the spark duration determines the pressure characteristic in the combustion chambers of the i.c. engine, **characterized in that** by means of an ignition system in the form of an a.c. ignition system the length of the spark duration of the ignition spark of the spark plug (ZK) is controlled non-dissipatively through selection of the number of amplitudes of the alternating voltage, which are transferred to the spark plug (ZK) to generate an ignition spark, and that the ignition energy of the ignition spark of the spark plug (ZK) is varied in accordance with the load condition of the i.c. engine and with further characteristic values available to the engine.

2. Method according to claim 1, **characterized in that** the ignition energy of the ignition spark of the spark plug (ZK) is controlled **in that** the a.c. ignition system for an ignition operation of a spark plug (ZK) compares the voltage (U1) dropping at a measuring resistor (MW) for equality with a reference voltage (U2), which is selected by a control unit (SG), at a control input (SE) of the a.c. ignition system.

3. Method according to claim 1 or 2, **characterized in that**, after termination of the spark duration, detection of combustion misfirings is effected by means of the ionic current measuring apparatus.

4. Method according to one of claims 1 to 3, **characterized in that** the frequency of the a.c. ignition system is adapted to the requirements of ignition of the fuel-air mixture and of the ionic current measurement.

## Revendications

1. Procédé pour la reconnaissance d'une combustion accompagnée de cognement dans un moteur à combustion interne comportant un système d'allumage, dans lequel la longueur de la durée de combustion de l'étincelle d'allumage de la bougie d'allumage (ZK) est modifiée en fonction de l'état de charge du moteur à combustion interne, et comportant un dispositif de mesure de courant ionique qui, après la fin de la durée de combustion de l'étincelle, détermine l'évolution de pression dans les chambres de combustion du moteur à combustion interne, **caractérisé en ce que** la longueur de la durée de combustion de l'étincelle d'allumage de la bougie d'allumage (ZK) est commandée sans pertes en imposant le nombre des amplitudes de la tension alternative transmises pour former une étincelle d'allumage à la bougie d'allumage (ZK) au moyen d'un système d'allumage réalisé sous forme de système d'allumage à tension alternative, et **en ce que** l'énergie d'allumage de l'étincelle d'allumage de la bougie d'allumage (ZK) est modifiée en correspondance de l'état de charge du moteur à combustion interne et d'autres valeurs caractéristiques disponibles depuis le moteur.

2. Procédé selon la revendication 1, **caractérisé en ce que** l'énergie d'allumage de l'étincelle d'allumage de la bougie d'allumage (ZK) est commandée du fait que pour une opération d'allumage d'une bougie d'allumage (ZK) le système d'allumage à tension alternative compare la tension (U1) chutant aux bornes d'une résistance de mesure (MW) avec une tension de référence (U2) prédéterminée par un appareil de commande (SG) au niveau d'une entrée de commande (SE) du système d'allumage à tension alternative.

3. Procédé selon l'une ou l'autre des revendications 1 et 2, **caractérisé en ce qu'**après la fin de la durée de combustion de l'étincelle, on effectue une reconnaissance des ratés de combustion au moyen du dispositif de mesure de courant ionique.

4. Procédé selon l'une des revendications 1 à 3, **caractérisé en ce que** la fréquence du système d'allumage à tension alternative est adaptée aux besoins de l'allumage du mélange carburant-air et de la mesure de courant ionique.
